(19) Europäisches Patentamt / European Patent Office / Office européen des brevets

(11) **EP 3 404 518 A1**

(12) **EUROPEAN PATENT APPLICATION**
published in accordance with Art. 153(4) EPC

(43) Date of publication:
**21.11.2018 Bulletin 2018/47**

(51) Int Cl.:
**G06F 3/044** (2006.01)   **G06F 3/041** (2006.01)

(21) Application number: **17743622.7**

(22) Date of filing: **18.01.2017**

(86) International application number:
**PCT/CN2017/071495**

(87) International publication number:
**WO 2017/129007 (03.08.2017 Gazette 2017/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.01.2016  CN 201610061741**

(71) Applicant: **Huawei Technologies Co., Ltd.
Longgang District
Shenzhen, Guangdong 518129 (CN)**

(72) Inventors:
• **ZHONG, Guanghua**
  **Shenzhen**
  **Guangdong 518129 (CN)**
• **GOU, Shuxin**
  **Shenzhen**
  **Guangdong 518129 (CN)**
• **HUANG, Jisong**
  **Shenzhen**
  **Guangdong 518129 (CN)**

(74) Representative: **Epping - Hermann - Fischer
Patentanwaltsgesellschaft mbH
Schloßschmidstraße 5
80639 München (DE)**

(54) **TOUCH POINT POSITIONING METHOD AND APPARATUS, AND TERMINAL DEVICE**

(57)    Embodiments of the present invention disclose a touchscreen touch point positioning method and apparatus, and a terminal device, so that scanning time can be effectively shortened, and a point report rate is improved. The method in the embodiments of the present invention includes: for each target sub-area in a target area, performing, by a touchscreen controller, parallel scanning on horizontal channels in the target sub-area, and determining a target sub-area in which a touch point exists; determining whether the sub-area in which the touch point exists can be divided; if it can be divided, determining the target sub-area in which the touch point exists as a target area, and repeatedly performing the foregoing steps until a target sub-area in which the touch point exists cannot be divided; determining a horizontal coordinate of the touch point; and determining a vertical coordinate corresponding to the touch point according to vertical channels that receive horizontal channel signals in parallel. In the embodiments of the present invention, a horizontal coordinate is scanned by means of parallel transmission on multiple channels, and a scanning range is narrowed by means of target area division in an iterative descending manner, so that scanning time can be reduced, and a point report rate is improved, so as to improve user experience.

FIG. 1-3

## Description

This application claims priority to Chinese Patent Application No. 201610061741.X, filed with the Chinese Patent Office on January 28, 2016 and entitled "TOUCH POINT POSITIONING METHOD AND APPARATUS, AND TERMINAL DEVICE", which is incorporated herein by reference in its entirety.

## TECHNICAL FIELD

The present invention relates to the touchscreen field, and in particular, to a touchscreen touch point positioning method and apparatus, and a terminal device.

## BACKGROUND

As a human-computer interaction interface, a touchscreen is widely applied to various digital information systems due to advantages, for example, the touchscreen is easy to use, has a fast response speed, and saves space. The touchscreen is scanned at a specific scanning frequency during operation of the touchscreen, so as to obtain a touch position of a user.

The touchscreen may be classified into a resistive touchscreen, a surface capacitive touchscreen, a projected capacitive touchscreen, an infrared touchscreen, a surface acoustic wave touchscreen, a bending wave touchscreen, an active digital converter touchscreen, and an optical imaging touchscreen according to an operating principle of the touchscreen and a medium for transmitting information. As iPhone appears and becomes popular around the world, Apple Inc. first applies a projected capacitive touchscreen to the field of mobile phone terminals. With excellent and comfortable user experience, a mobile phone terminal enters a new era by using a projected capacitive touchscreen technology.

A principle of the projected capacitive touchscreen is: A sensor transmits an electrostatic field line by using an electrode of the touchscreen. Generally, a capacitance used in a projected capacitive sensing technology has two types, that is, a self-capacitance and a mutual capacitance. In a mutual capacitive touchscreen, an indium tin oxide (Indium-Tin Oxide, ITO) is used to make a horizontal electrode and a vertical electrode on a glass surface. An intersection of two groups of electrodes forms a capacitor, that is, the two groups of electrodes respectively constitute two poles of the capacitor. When a finger touches a capacitive touchscreen, coupling between two electrodes near a touch point is affected, and a capacitance between the two electrodes changes. The mutual capacitive touchscreen determines a position of the touch point by scanning a capacitance change at each intersection. A capacitance at each intersection and a capacitance change after touch can be detected by using a mutual capacitance scanning method. Therefore, in a mutual capacitance scanning time period, XxY electrodes need to be scanned and detected, and no "ghost point" is generated. Therefore, many mobile phone manufacturers use a mutual capacitance technology in the touchscreen of the mobile phone terminal.

Currently, in the mutual capacitance technology, progressive scanning is performed on all sensing areas of the touchscreen, and X×Y electrodes need to be scanned and detected. Consequently, scanning time is relatively long, and a point report rate (times of reporting touch point information by a touchscreen to a processor per second) is difficult to improve.

## SUMMARY

Embodiments of the present invention provide a touchscreen touch point positioning method and apparatus, and a terminal device, so that scanning time can be effectively shortened, and a point report rate is improved, so as to improve user experience.

According to a first aspect, an embodiment of the present invention provides a touchscreen touch point positioning method, including:

for each target sub-area in a target area, performing, by a touchscreen controller, parallel scanning on horizontal channels in the target sub-area, and determining a target sub-area in which a touch point exists; determining whether the target sub-area in which the touch point exists can be divided; and if it can be divided, determining the target sub-area in which the touch point exists as a target area, and repeatedly performing the foregoing step until a sub-area in which the touch point exists cannot be divided; or when the sub-area in which the touch point exists cannot be divided, determining a horizontal coordinate of the touch point, where the target sub-area is obtained by means of division according to a direction indicated by a horizontal channel in the target area, and a quantity of the target sub-areas is greater than 1, but is less than or equal to a quantity of horizontal channels in the target area. In this process, a vertical coordinate corresponding to the touch point is determined according to vertical channels that receive horizontal channel signals in parallel.

In this embodiment of the present invention, a touchscreen is not scanned progressively. However, the touchscreen is divided into multiple sub-areas, and parallel scanning is separately performed on all horizontal channels (X direction channels or horizontal X channels) of each sub-area. A target sub-area in which no touch point exists is not scanned subsequently; and a sub-area in which a touch point exists is scanned by repeating the foregoing actions for iterative division, until division cannot be performed, and then position information of the touch point may be determined. Therefore, in this embodiment of the present invention, parallel scanning is performed on multiple channels, the touchscreen is divided, and a scanning range is narrowed in an iterative descending manner, so that the scanning range of the touchscreen (that is, a target area) can be gradually reduced, scanning time is reduced, and a point report rate is improved.

With reference to the first aspect, in a first possible implementation of the first aspect, for each target sub-area in a target area, the performing parallel scanning on horizontal channels in the target sub-area, and determining a target sub-area in which a touch point exists includes: sequentially performing parallel scanning on the horizontal channels in each target sub-area in the multiple target sub-areas, and determining the target sub-area in which the touch point exists; or

in a case in which a processor supports parallel scanning of horizontal channels in multiple target sub-areas, performing parallel scanning on horizontal channels in the multiple target sub-areas in parallel, and determining the target sub-area in which the touch point exists. Scanning efficiency may be further improved and scanning time is reduced in this scanning manner.

With reference to the first aspect or the first possible implementation of the first aspect, in a second possible implementation of the first aspect, a process of determining whether the target sub-area in which the touch point exists can be divided is: determining whether the target sub-area in which the touch point exists has only one horizontal channel; and if the target sub-area in which the touch point exists has only one horizontal channel, determining that the target sub-area in which the touch point exists cannot be divided; or if the target sub-area in which the touch point exists has multiple horizontal channels, determining that the target sub-area in which the touch point exists can be divided.

With reference to the second possible implementation of the first aspect, in a third possible implementation of the first aspect, a manner of determining the horizontal coordinate of the touch point is: determining that a horizontal coordinate of a horizontal channel of the target sub-area in which the touch point exists is the horizontal coordinate of the touch point.

With reference to any one of the first aspect, the first possible implementation of the first aspect to the third possible implementation of the first aspect, in a fourth possible implementation of the first aspect, the determining a vertical coordinate corresponding to the touch point according to vertical channels that receive horizontal channel signals in parallel includes: detecting whether capacitances on the vertical channels that receive the horizontal channel signals in parallel change, and if it is detected that a capacitance on a vertical channel changes, determining that a vertical coordinate corresponding to the vertical channel whose capacitance changes is the vertical coordinate of the touch point.

With reference to any one of the first aspect, the first possible implementation of the first aspect to the fourth possible implementation of the first aspect, in a fifth possible implementation of the first aspect, the quantity of the target sub-areas is two, and the two target sub-areas have an equal quantity of horizontal channels. That is, a dichotomy is generally used to divide a target area into two target sub-areas: an upper half screen and a lower half screen, and parallel scanning is performed on horizontal channels of the upper half screen and the lower half screen, so that a half screen in which the touch point exists is determined. In addition, equal in this embodiment of the present invention may not be completely equal, and may be approximately equal.

It should be noted that, with reference to the first aspect, in some embodiments, a target area may be divided by using another N-division method, such as a trichotomy and quartering, and then parallel scanning is performed on horizontal channels in each target sub-area obtained by division. In this embodiment of the present invention, a dichotomy is merely used as an example instead of a limitation.

A target area in which a touch point exists is divided into an upper half screen and a lower half screen by using a dichotomy. Compared with another N-division method (for example, a trichotomy and quartering), the target area can be divided more conveniently, so that load of a processor is reduced.

According to a second aspect, an embodiment of the present invention provides a touch point positioning apparatus, a touchable area of a touchscreen is an initial target area in which a touch point is scanned, and the touch point positioning apparatus includes:

a scanning module, configured to: for each target sub-area in a target area, perform parallel scanning on horizontal channels in the target sub-area, and determine a target sub-area in which a touch point exists, where the target sub-area is obtained by means of division according to a direction indicated by a horizontal channel in the target area, and a quantity of the target sub-areas is greater than 1, but is less than or equal to a quantity of horizontal channels in the target area; a horizontal coordinate determining module, configured to: determine whether the target sub-area in which the touch point exists can be divided; and if the target sub-area in which the touch point exists can be divided, determine the target sub-area in which the touch point exists as a target area; or if the target sub-area in which the touch point exists cannot be divided, determine a horizontal coordinate of the touch point; and a vertical coordinate determining module, configured to determine a vertical coordinate corresponding to the touch point according to vertical channels that receive horizontal channel signals in parallel.

With reference to the second aspect, in a first possible implementation of the second aspect, the scanning module is specifically configured to: sequentially perform parallel scanning on the horizontal channels in each target sub-area in the multiple target sub-areas, and determine the target sub-area in which the touch point exists.

With reference to the second aspect, in a second possible implementation of the second aspect, the scanning module is specifically configured to: perform parallel scanning on horizontal channels in the multiple target sub-areas in parallel, and determine the target sub-area in which the touch point exists.

With reference to the second aspect, the first possible implementation of the second aspect, or the second possible implementation of the second aspect, in a third possible implementation of the second aspect, in terms of determining whether the target sub-area in which the touch point exists can be divided, the horizontal coordinate determining module is specifically configured to: determine whether the target sub-area in which the touch point exists has only one horizontal channel; and if the target sub-area in which the touch point exists has only one horizontal channel, determine that the target sub-area in which the touch point exists cannot be divided; or if the target sub-area in which the touch point exists has multiple horizontal channels, determine that the target sub-area in which the touch point exists can be divided.

With reference to any possible implementation of the second aspect, in terms of determining the horizontal coordinate of the touch point, the horizontal coordinate determining module is specifically configured to: determine that a horizontal coordinate of a horizontal channel of the target sub-area in which the touch point exists is the horizontal coordinate of the touch point.

With reference to any possible implementation of the second aspect, the vertical coordinate determining module is specifically configured to: detect whether capacitances on the vertical channels that receive the horizontal channel signals in parallel change, and if it is detected that a capacitance on a vertical channel changes, determine that a vertical coordinate corresponding to the vertical channel whose capacitance changes is the vertical coordinate corresponding to the touch point.

With reference to any possible implementation of the second aspect, the quantity of the target sub-areas is two, and the two target sub-areas have an equal quantity of horizontal channels.

According to a third aspect, an embodiment of the present invention provides a terminal device. The terminal device includes a touchscreen and a touch point positioning apparatus that is connected to the touchscreen, a touchable area of the touchscreen is an initial target area, and the touch point positioning apparatus is the touch point positioning apparatus described in any possible implementation of the second aspect.

Specifically, the terminal device may include a handheld device, a vehicular device, a wearable device, a computing device, and various types of user equipment (User Equipment, UE), such as a mobile phone and a tablet computer.

According to a fourth aspect, an embodiment of the present invention provides a terminal device. The terminal device includes a touchscreen and a touchscreen controller that is connected to the touchscreen, and the touchscreen includes multiple horizontal electrodes and multiple vertical electrodes; and the touchscreen controller is configured to: for each target sub-area in a target area of the touchscreen, perform scanning by controlling horizontal electrodes in the target sub-area to send excitation signals in parallel, and controlling all vertical electrodes to receive the excitation signals in parallel, and determine a target sub-area in which a touch point exists, where the target sub-area is obtained by means of division according to a direction indicated by a horizontal channel formed by horizontal electrodes in the target area, and a quantity of the target sub-areas is greater than 1, but is less than or equal to a quantity of horizontal channels formed by horizontal electrodes in the target area; determine whether the target sub-area in which the touch point exists can be divided, and if it can be divided, determine the target sub-area in which the touch point exists as a target area, and for each target sub-area in the target area, continue to perform scanning by controlling horizontal electrodes in the target sub-area to send excitation signals in parallel and controlling all vertical electrodes to receive the excitation signals in parallel; or if it cannot be divided, determine a horizontal coordinate of the touch point, and determine a vertical coordinate corresponding to the touch point according to vertical channels in which vertical electrodes that receive horizontal electrode signals in parallel are located.

With reference to the fourth aspect, the touchscreen in this embodiment of the present invention may further have a function described in any one of the first possible implementation of the first aspect to the fifth possible implementation of the first aspect.

According to a fifth aspect, an embodiment of the present invention further provides a computer storage medium. The medium stores a program, and when the program is performed, some or all of steps in the method of the foregoing first aspect are included.

It can be learned from the foregoing technical solutions that solutions of the embodiments of the present invention have the following beneficial effects:

In the embodiments of the present invention, a touchscreen is not scanned progressively. However, a horizontal coordinate is scanned by means of parallel transmission on multiple channels, and a scanning range is narrowed in an iterative descending manner by using an N-division method. Therefore, the scanning range of the touchscreen can be gradually reduced, and a specific position of a touch point is finally determined, so that scanning time can be reduced, and a point report rate is improved.

**BRIEF DESCRIPTION OF DRAWINGS**

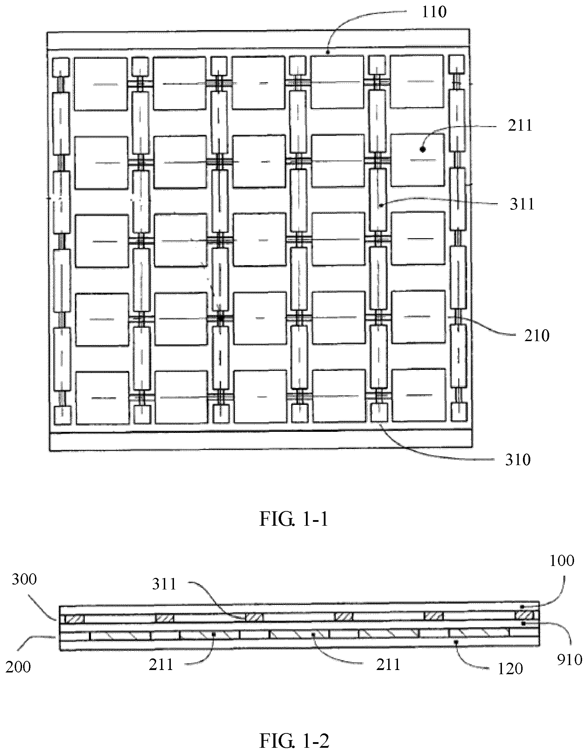

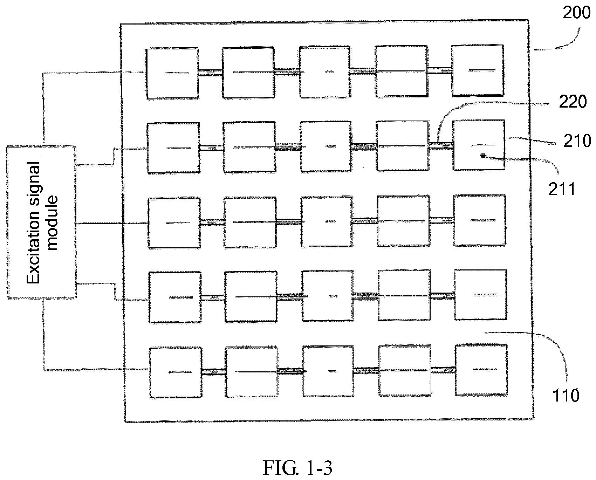

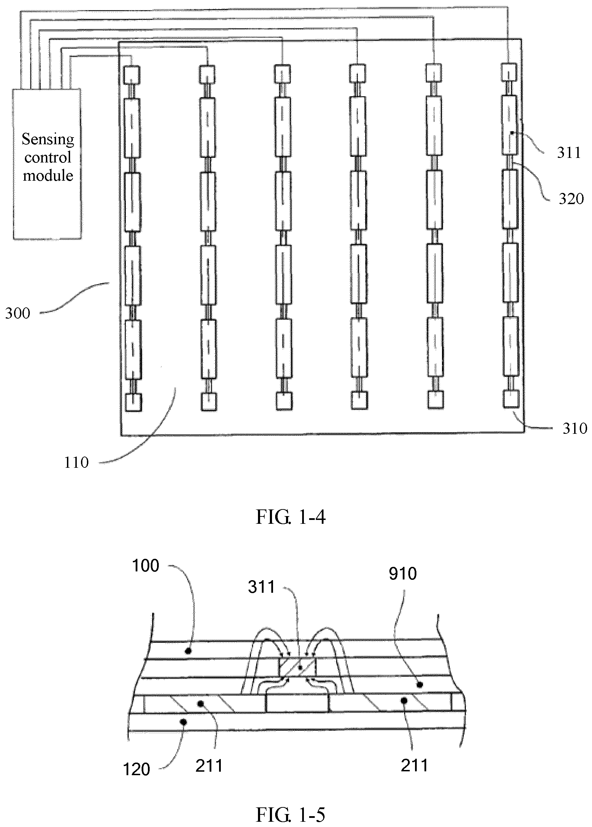

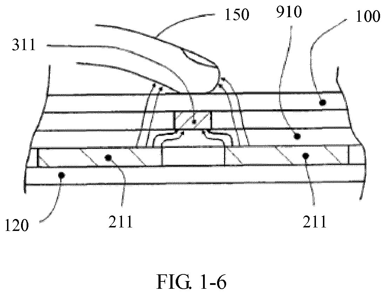

FIG. 1-1 is a schematic diagram of a main view of an orthographic projection of a mutual capacitive touchscreen;
FIG. 1-2 is a cross-sectional view of FIG. 1-1;
FIG. 1-3 is a schematic diagram of a main view of an orthographic projection of a drive layer 200 in a mutual capacitive touchscreen;

FIG. 1-4 is a schematic diagram of a main view of an orthographic projection of a sensing layer 300 in a mutual capacitive touchscreen;

FIG. 1-5 is a schematic diagram of electric field distribution obtained when no point in FIG. 1-4 is touched;

FIG. 1-6 is a schematic diagram of electric field distribution obtained when a point in FIG. 1-4 is touched;

FIG. 2 is a schematic diagram of a method for scanning a mutual capacitive touchscreen in the prior art according to an embodiment of the present invention;

FIG. 3 is a flowchart of a touchscreen touch point positioning method according to an embodiment of the present invention;

FIG. 4 is a schematic diagram in which a touchscreen is quickly scanned according to an embodiment of the present invention;

FIG. 5 is a schematic diagram of dichotomy scanning for single-point touch according to an embodiment of the present invention;

FIG. 6 is a schematic diagram of dichotomy scanning for multi-point touch according to an embodiment of the present invention;

FIG. 7 is a schematic diagram of a function module structure of a touch point positioning apparatus according to an embodiment of the present invention; and

FIG. 8 is a schematic diagram of a hardware structure of a terminal device according to an embodiment of the present invention.

## DESCRIPTION OF EMBODIMENTS

To make persons skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

A mutual capacitance in the embodiments of the present invention is also referred to as a mutual capacitance, and a touchscreen that uses this technology is referred to as a mutual capacitive touchscreen, a mutual capacitive touchscreen, or a mutual capacitive touchscreen. During detection of a capacitance in the mutual capacitive touchscreen, horizontal electrodes sequentially send excitation signals, and all vertical electrodes simultaneously receive the signals, so that capacitances at intersections of all the horizontal and vertical electrodes, that is, a capacitance of a two-dimensional plane of the entire touchscreen can be obtained. Coordinates of each touch point can be calculated according to two-dimensional capacitance variation data of the touchscreen. Therefore, although there are multiple touch points on a screen, true coordinates of each touch point can be calculated.

The mutual capacitive touchscreen in the present invention is used to cover a surface of a display screen that is used to display a graphic or an image, and to control content displayed on the display screen by using a peripheral control apparatus. A specific structure of a mutual capacitive touchscreen and a touch point positioning principle in the prior art are shown in FIG. 1-1 to FIG. 1-6, and the following gives detailed description.

A structural diagram of the mutual capacitive touchscreen is shown in FIG. 1-1. A cross-sectional view of the mutual capacitive touchscreen is shown in FIG. 1-2, including a touch plane 100, a drive layer 200 and a sensing layer 300 that are not on a same plane, and a transparent insulation medium plane 910 between the drive layer 200 and the sensing layer 300. In addition, a protection plane 120 made from a transparent insulating material may further be disposed. The drive layer 200, the sensing layer 300, and the medium plane 910 are disposed between the touch plane 100 and the protection plane 120. The protection plane 120 is in contact with the display screen (or a display panel).

As shown in FIG. 1-3, the drive layer 200 includes multiple panel drive electrodes 211 that are made from a transparent conductive material and that are distributed in a same plane at an interval. The drive electrodes 211 are grouped into several drive lines 210 in series by using drive electrode connection lines 220. The drive electrode 211 is referred to as a horizontal electrode, and the drive line 210 is a horizontal X channel or a horizontal channel in this embodiment of the present invention.

As shown in FIG. 1-4, the sensing layer 300 includes panel sensing electrodes 311 that are made from a transparent conductive material and that are distributed in a same plane at an interval. The sensing electrodes 311 are grouped into several sensing lines 310 in series by using sensing electrode lines 320. The sensing electrode 311 is referred to as a vertical electrode, and the sensing line 310 is a vertical Y channel or a vertical channel in this embodiment of the present invention.

All drive lines 210 are parallel to each other, all sensing lines 310 are parallel to each other, and the drive lines 210 and the sensing lines 310 intersect perpendicularly. The drive lines 210 are electrically connected to an excitation signal module, and the sensing lines 310 are electrically connected to a sensing control module, so that a mutual capacitance is formed between the drive line 210 and the sensing line 310, as shown in FIG. 1-5.

During detection of the mutual capacitance, a touchscreen control apparatus controls horizontal electrodes to send excitation signals, and controls all vertical electrodes to simultaneously receive the signals, so that the sensing control module can detect capacitances at intersections of all the horizontal electrodes and vertical electrodes (that is, mutual capacitances formed between the drive lines 210 and the sensing lines 310). As shown in FIG. 1-6, when a finger 150 touches the touch panel 100 and is in a touch area, the finger 150 is equivalent to an electrode above a sensing line 310, and changes an electric field between a drive line 210 and the top of the sensing line 310. The change may mean that the finger 510 absorbs an electrostatic field line from the drive line 210 to the top of the sensing line 310, so that a mutual capacitance of a touch area in which the touch point is located changes, and a sensing control circuit may determine a position touched in the touch area.

In the prior art, the touchscreen control apparatus controls the horizontal electrodes to send excitation signals line by line (that is, a drive line 210 by a drive line 210), and controls all the vertical electrodes (that is, all the sensing lines 310 in the touchscreen) to simultaneously receive the signals. When a finger touches a touchscreen position corresponding to the drive line, the sensing control module connected to a vertical electrode may detect a capacitance change on a sensing line corresponding to the touch point, that is, may determine a vertical coordinate of the corresponding touch point in a two-dimensional plane in a software calculation manner, and may determine a horizontal coordinate of the touch point in the two-dimensional plane according to the drive line 210 that currently sends an excitation signal.

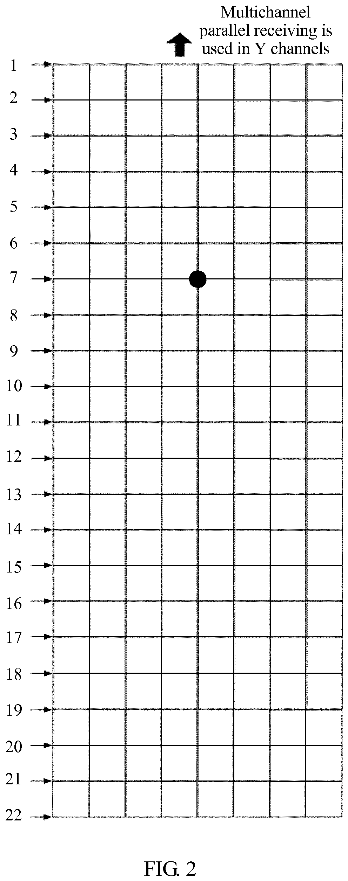

Currently, for a common 5-inch touchscreen, a capacitance matrix is generally 22x9 (a quantity of horizontal X channels is 22, and a quantity of vertical Y channels is nine). A schematic diagram of scanning the 5-inch touchscreen is shown in FIG. 2. A black point in the figure represents a touch point, a quantity of horizontal channels (X channels or horizontal X channels, that is, the drive lines 210 in the embodiment shown in FIG. 1) is 22, and scanning times required for determining a position of the touch point on the touchscreen are 22 times. If t represents time required for scanning one horizontal X channel once, it is determined that scanning time for determining the position of the touch point on the touchscreen is 22t.

In the prior art, during positioning of the touch point, the scanning time is 22t. Therefore, scanning time for detecting the touch point is excessively long, and a point report rate is limited. An embodiment of the present invention provides a method for quickly scanning and detecting a touchscreen, so that scanning time can be effectively shortened, and a point report rate is improved, and therefore, user experience is more comfortable and smooth.

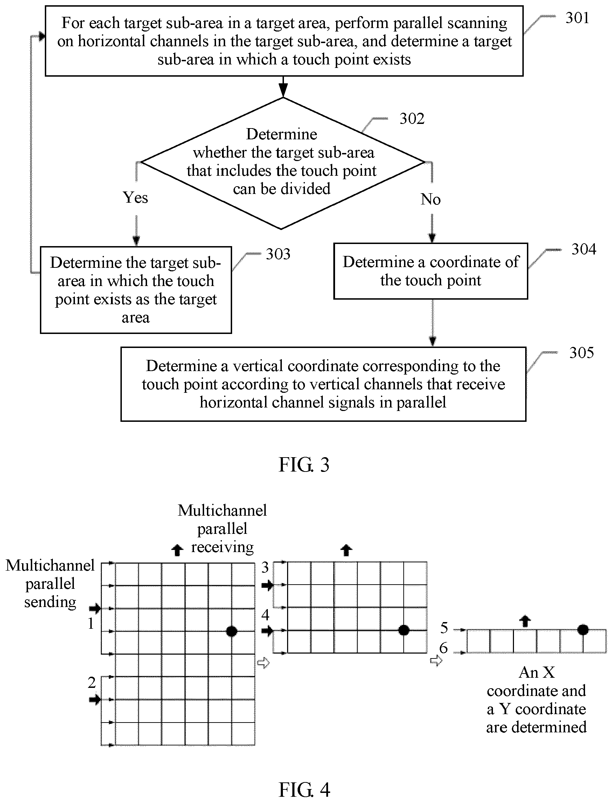

In the following, a procedure of a touchscreen touch point positioning method in this embodiment of the present invention is described in detail with reference to FIG. 3. The method is performed by a touchscreen control apparatus (or a touchscreen controller). The touchscreen control apparatus may be specifically a micro control unit (Microcontroller Unit, MCU) located in a touchscreen, or may be an application processor or an integrated circuit (integrated circuit, IC) located in a terminal device.

301. For each target sub-area in a target area, perform parallel scanning on horizontal channels in the target sub-area, and determine a target sub-area in which a touch point exists.

In this embodiment of the present invention, a touchscreen control apparatus performs scanning by controlling multiple horizontal channels to transmit excitation signals (also referred to as electrostatic field lines) in parallel, and controlling multiple vertical channels to receive the excitation signals in parallel, and divides a to-be-scanned target area into multiple target sub-areas to narrow a scanning range in an iterative descending manner.

A manner of dividing the to-be-scanned target area into the multiple target sub-areas is referred to as an N-division method in this embodiment of the present invention. Specifically, a touchable area of the touchscreen is used as an initial target area for scanning, and the target area is divided into N target sub-areas in a direction indicated by a horizontal channel. Each target sub-area includes $M_1$, $M_2$, ..., and $M_N$ horizontal channels, and a value of $\sum_{i=1}^{N} M_i$ is a quantity of horizontal X channels in the target area.

During first division, a to-be-scanned target area is an entire touchable area of the touchscreen, and a value of $\sum_{i=1}^{N} M_i$ is a quantity of horizontal X channels of the entire touchscreen. In subsequent division, a value of $\sum_{i=1}^{N} M_i$ is a quantity of horizontal X channels of a corresponding to-be-scanned target area.

A preferred division manner of the N-division method is equal division, so that each sub-area has a same or an approximately same quantity of horizontal X channels, that is, each sub-area has a same or an approximately same value of a quantity $M_i$ of horizontal channels.

The N-division method may be specifically a dichotomy, a trichotomy, or another division manner, where N is a positive integer, is greater than 1, and is not greater than a quantity of horizontal X channels of the touchscreen. Preferably, the dichotomy is generally used.

For example, if the dichotomy is used, for the common 5-inch touchscreen whose quantity of horizontal X channels is 22, the touchscreen may be divided, by using the dichotomy, into two target sub-areas, an upper screen and a lower screen, that respectively have 11 horizontal X channels.

As shown in FIG. 4, in the touchscreen, a quantity of horizontal X channels is nine, and a quantity of vertical Y channels is seven. If the dichotomy is used, the touchscreen is divided into two target sub-areas: an upper half screen (as a part shown in 1 in FIG. 4) that has five horizontal X channels and a lower half screen (as a part shown in 2 in FIG. 4) that has four horizontal X channels.

It should be noted that, in actual application program implementation, a processor may not divide a to-be-scanned target area into N target sub-areas, but may directly designate a number of a channel that needs to be scanned in each procedure. Therefore, the N-division method in this embodiment of the present invention may not have an actual division action, but represents a manner of dividing a to-be-scanned area.

After the touchscreen is divided into N target sub-areas, for each target sub-area, scanning is performed in a manner in which multiple horizontal X channels in the target sub-area transmit electrostatic field lines in parallel and vertical Y channels receive the electrostatic field lines in parallel. If the target sub-area is scanned, and a capacitance in this area changes during scanning, it is determined that a touch point exists in this target sub-area.

As shown in FIG. 4, after the touchscreen is divided into two target sub-areas: an upper half screen and a lower half screen, scanning is performed on the touchscreen in a manner in which five X channels in the upper half screen simultaneously transmit electrostatic field lines and all vertical channels (Y channels) receive the electrostatic field lines in parallel; and for the lower half screen, a same scanning manner is used, that is, scanning is performed in a manner in which four X channels in the lower half screen simultaneously transmit electrostatic field lines and vertical Y channels receive the electrostatic field lines in parallel. It is learned according to a capacitance change during scanning that the touch point exists in the upper half screen, and no touch point exists in the lower half screen.

Optionally, there are two manners of performing parallel scanning on horizontal channels in a target sub-area.

1. For multiple target sub-areas obtained by division, parallel scanning is performed on horizontal channels in only one target sub-area at a time. After a target sub-area is scanned, another target sub-area is scanned until all target sub-areas are scanned, and then a target sub-area in which a touch point exists is determined. This scanning manner is sequential scanning, and an order of the sequential scanning may be from up to down, or may be from down to up, or may be a random order.

2. For multiple target sub-areas obtained by division, parallel scanning is simultaneously performed on the multiple target sub-areas at a time. For example, when the touchscreen is divided into three target sub-areas A, B, and C, parallel scanning is simultaneously performed on horizontal channels of A, B, and C, and then a target sub-area in which a touch point exists is determined.

It should be noted that, in the second parallel scanning manner, a processing speed of a processor needs to be able to support simultaneous parallel scanning of multiple target sub-areas.

302. Determine whether the target sub-area that includes the touch point can be divided.

Scanning is performed in a manner in which the horizontal channels transmit excitation signals in parallel, and the vertical channels receive the excitation signals in parallel, not in a manner of performing progressive scanning on the horizontal channels in the prior art. Therefore, after each division by using the N-division method and scanning, only a target sub-area in which the touch point exists can be determined, and a horizontal coordinate of the touch point cannot be accurately determined. Therefore, the target sub-area in which the touch point exists needs to be divided again until division cannot be performed, and then the horizontal coordinate of the touch point can be accurately determined.

A process of determining whether the target sub-area in which the touch point exists can be divided is: determining whether the target sub-area in which the touch point exists has only one horizontal channel; and if the target sub-area in which the touch point exists has only one horizontal channel, determining that the target sub-area in which the touch point exists cannot be divided; or if the target sub-area in which the touch point exists has multiple horizontal channels, determining that the target sub-area in which the touch point exists can be divided.

303. Determine the target sub-area in which the touch point exists as the target area.

After all the target sub-areas in the touchscreen are scanned once, when it is determined that the target sub-area in which the touch point exists still can be divided, the target sub-area in which the touch point exists is used as a target area for division, and iterative scanning continues to be performed, that is, steps 301 and 302 continue to be performed for iterative scanning, so that in subsequent scanning, a to-be-scanned area is gradually narrowed. In this process, iterative scanning is not performed on a target sub-area in which no touch point exists.

In this manner, iterative scanning is performed until the target sub-area in which the touch point exists cannot be divided, and then step 304 is performed.

In this process, each time (except the first time) before an area in which the touch point exists is divided, whether the target sub-area in which the touch point exists can be divided needs to be determined first.

In an implementation, a target area is corresponding to a variable, and a value of the target sub-area in which the touch point is stored or a reference object of the target sub-area is assigned to the variable.

304. Determine a horizontal coordinate of the touch point.

When step 301, step 302, and step 303 are repeatedly performed until the target sub-area in which the touch point exists has one horizontal X channel and cannot be divided based on the horizontal X channel, it may be determined that a horizontal coordinate of a horizontal X channel in which the touch point exists is the horizontal coordinate of the touch point.

As shown in FIG. 4, after first division, an upper half screen in which the touch point exists is used as a target area. The upper half screen is divided into a target sub-area (as a part shown in 3 in FIG. 4) that has three horizontal X channels and a target sub-area (as a part shown in 4 in FIG. 4) that has two horizontal X channels. Then, after step 301, step 302, and step 303 are repeatedly performed, a target sub-area in which the touch point exists and that has two horizontal X channels is used as a target area, and the target area is divided by using a dichotomy, to obtain two target sub-areas (which are respectively parts shown in 5 and 7 in FIG. 4) that separately have one horizontal X channel. In this case, an upper half area in which the touch point exists only has one horizontal X channel and cannot be divided, and it may be determined that a horizontal coordinate of the horizontal X channel is the horizontal coordinate of the touch point.

305. Determine a vertical coordinate corresponding to the touch point according to vertical channels that receive horizontal channel signals in parallel.

Detection of the vertical coordinate of the touch point is the same as description in the embodiment shown in FIG. 1. When the horizontal X channels are being scanned and transmit electrostatic fields, all the vertical Y channels simultaneously receive the electrostatic fields in parallel. Therefore, when the touch point is obtained by means of scanning, a sensing control module may detect a capacitance change on a sensing line corresponding to the touch point. A vertical coordinate corresponding to a vertical Y channel whose capacitance changes is the vertical coordinate corresponding to the touch point in a current target sub-area. The vertical coordinate of the corresponding touch point in a two-dimensional plane can be determined in a software calculation manner.

It should be noted that the vertical coordinate of the touch point may be determined when the touch point is first obtained by means of scanning or may be determined when the touch point is obtained by means of scanning during iterative scanning at any time, for example, may be determined in step 304, that is, when the target sub-area in which the touch point exists cannot be divided, a horizontal coordinate of the touch point is determined, and a vertical coordinate is simultaneously determined.

In addition, step 304, and step 301, step 302, and step 303 are not performed in a strict order, and step 304 may be simultaneously performed in a process of performing step 301, step 302, and step 303.

Coordinate position information of the touch point is the horizontal coordinate obtained in step 304, and the vertical coordinate obtained in step 305.

In this embodiment of the present invention, a touchscreen is not scanned progressively. However, the touchscreen is divided into N target sub-areas based on an N-division method, and parallel scanning is separately performed on all horizontal X channels of each target sub-area. A target sub-area in which no touch point exists is not scanned subsequently; and a target sub-area in which a touch point exists is scanned by repeating the foregoing actions, that is, performing iterative division by using the N-division method, until division cannot be performed, and then position information of the touch point may be determined. In this embodiment of the present invention, a horizontal coordinate is scanned by means of parallel transmission on multiple channels, and a scanning range is narrowed in an iterative descending manner by using a dichotomy, so that the scanning range of the touchscreen can be gradually reduced, scanning time is reduced, and a point report rate is improved.

As shown in FIG. 4, the touchscreen has nine horizontal X channels and seven vertical Y channels. If a scanning method of progressive transmission on horizontal X channels in the prior art shown in FIG. 2 is used, scanning time is 9t (t represents time required for scanning an X channel once). In this embodiment of the present invention, if a dichotomy is used, division needs to be performed for only three times, and total scanning time is at most 7t. Therefore, scanning time can be reduced, and a point report rate is improved.

Preferably, an N-division method is generally used as a dichotomy. In addition, this embodiment of the present invention is not only applied to single-point touch but also applied to multi-point touch. In the following, single-point touch scanning and multi-point touch scanning are separately described in detail based on the dichotomy.

1. Single-point touch scanning

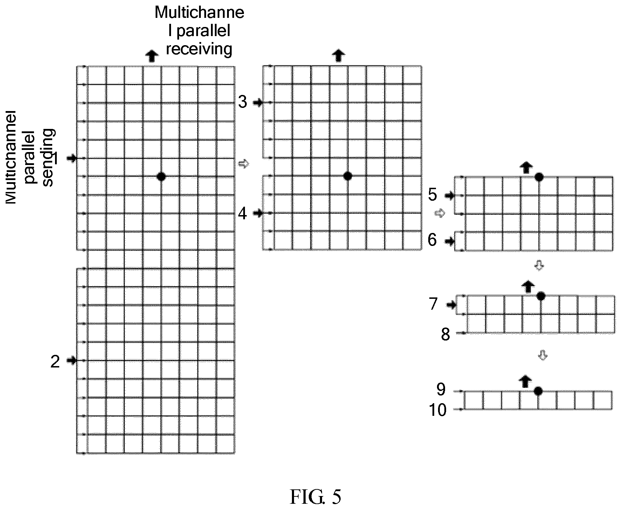

For single-point touch, a schematic scanning diagram is shown in FIG. 5. In this figure, a common 5-inch touchscreen is used. A capacitance matrix of the 5-inch touchscreen is 22×9 (a quantity of horizontal X channels is 22, and a quantity of vertical Y channels is nine), and a black point in the figure represents a touch point. A specific scanning method is as follows:
Step 1: Based on a dichotomy idea, after the touchscreen is divided into an upper half screen and a lower half screen, separately perform parallel scanning on multiple horizontal channels of the upper half screen and the lower half screen. According to different processing speeds supported by a processing unit of the touchscreen, there may be the following two specific scanning manners:
In a first manner, parallel scanning is sequentially performed on the multiple horizontal channels of the upper half screen and the lower half screen. Generally, the upper half screen is first scanned, and then the lower half screen is scanned. Certainly, the lower half screen may be first scanned, and then the upper half screen is scanned.

In a second manner, parallel scanning is simultaneously performed on the multiple horizontal channels of the upper half screen and the lower half screen, that is, when parallel scanning is performed on horizontal channels of the upper half screen, parallel scanning is performed on horizontal channels of the lower half screen at the same time.

A scanning process for single-point touch in a first scanning manner in which the upper half screen is first scanned, and then the lower half screen is scanned is described in the following.

Step 2: For the first time, the touchscreen control apparatus controls all horizontal electrodes of the upper half screen to simultaneously send excitation signals, and scan all capacitances (a part shown in 1 in FIG. 5) of the upper half screen in parallel, a capacitance changes during scanning, and it indicates that a touch point exists in this area; and for the second time, the touchscreen control apparatus scans all horizontal capacitances (a part shown in 2 in FIG. 5) of the lower half screen in parallel, a capacitance does not change during scanning, and this area is not scanned subsequently. In this way, a to-be-scanned area is gradually narrowed. In this case, all areas of the touchscreen are scanned, and scanning in this round ends.

Step 3: Third and fourth scanning are scanning performed based on the upper half screen (a part shown in 1 in FIG. 5) in step 1. The upper half screen is divided into an upper area and a lower area (parts shown in 3 and 4 in FIG. 5) for scanning. When scanning is performed for the ninth time and the tenth time, and an area cannot be divided, it may be determined that an area that is scanned for the ninth time and in which the touch point exists is a horizontal position of the touch point.

Step 4: For determining of a vertical position, when the horizontal X channels are scanned and transmit electrostatic fields, all the vertical Y channels simultaneously receive the electrostatic fields in parallel, and the vertical position is determined by using software.

In this embodiment of the present invention, scanning times used for determining position information of the touch point are 10, and scanning time is $10t$ ($t$ represents time required for scanning an X channel once). Therefore, compared with the prior art in which a scanning method of progressive transmission on horizontal X channels needs $22t$, scanning time is greatly reduced, and a point report rate is improved.

In addition, if the foregoing second scanning manner is used, parallel scanning is simultaneously performed on the multiple horizontal channels of the upper half screen and the lower half screen, scanning time used to determine position information of the touch point is half of that of sequential scanning, that is, $5t$, so that scanning time is further reduced.

2. Multi-point touch scanning

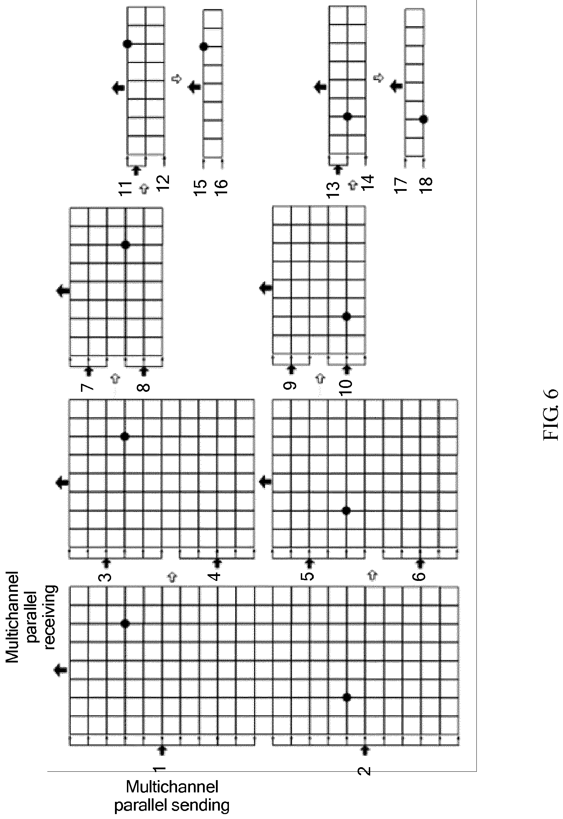

For multi-point touch, a schematic scanning diagram is shown in FIG. 6. Similarly, in this figure, a common 5-inch touchscreen is used. A capacitance matrix of the 5-inch touchscreen is $22 \times 9$ (a quantity of horizontal X channels is 22, and a quantity of vertical Y channels is nine), and black points in the figure represent touch points. A specific scanning method is as follows:

Step 1: Based on a dichotomy idea, the touchscreen is divided into an upper half screen and a lower half screen, a multichannel parallel transmission manner is used in the horizontal X channels, and parallel receiving is used in the vertical Y channels.

Similarly, a scanning process for multi-point touch in a first scanning manner in the embodiment shown in FIG. 5 in which the upper half screen is first scanned, and then the lower half screen is scanned is described in the following.

Step 2: For the first time, all horizontal capacitances of the upper half screen are scanned in parallel, a capacitance changes during scanning, it indicates that a touch point exists in this area, and iterative scanning continues to be performed on this area; and for the second time, all horizontal capacitances of the lower half screen are scanned in parallel, a touch point also exists, and iterative scanning continues to be performed on this area. In this case, all areas of the touchscreen are scanned, and scanning in this round ends.

Step 3: Third and fourth scanning and fifth and seventh scanning are scanning performed based on the upper half screen and the lower half screen in step 2 respectively. Iteration continues, the upper half screen is divided into an upper area and a lower area, and the lower half screen is divided into an upper area and a lower area for scanning. When scanning is performed for the 17th time and the 18th time, and neither two areas can be divided, it may be determined that the areas that are scanned for the 17th time and the 18th time and in which the touch points exist are horizontal positions of the touch points.

Step 4: For determining of vertical positions, when the horizontal X channels are scanned and transmit electrostatic fields, all the vertical Y channels simultaneously receive the electrostatic fields in parallel, and the vertical positions are determined by using software.

In this embodiment of the present invention, scanning times used for determining position information of the touch points are 18, and scanning time is $18t$ ($t$ represents time required for scanning an X channel once). Therefore, compared with the prior art in which a scanning method of progressive transmission on horizontal X channels needs $22t$, scanning time is reduced, and a point report rate is improved.

In addition, if the foregoing second scanning manner is used, parallel scanning is simultaneously performed on the multiple horizontal channels of the upper half screen and the lower half screen, scanning time used to determine position information of the touch points is half of that of sequential scanning, that is, 9t, so that scanning time is further reduced.

The foregoing describes a touchscreen touch point positioning method in the embodiments of the present invention, and the following describes a touch point positioning apparatus in the embodiments of the present invention from a perspective of a function module structure.

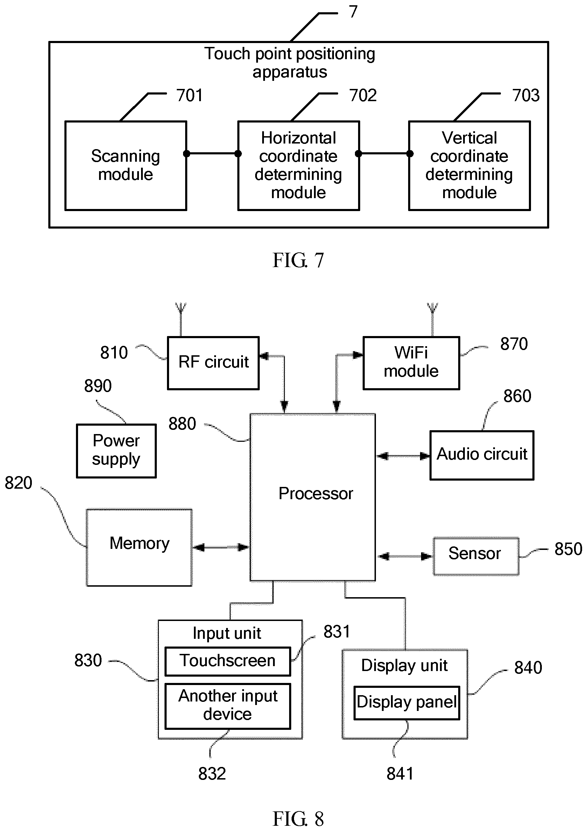

FIG. 7 is a schematic diagram of a function module structure of a touch point positioning apparatus according to an embodiment of the present invention, and the touch point positioning apparatus includes:

a scanning module 701, configured to: for each target sub-area in a target area, perform parallel scanning on horizontal channels in the target sub-area, and determine a target sub-area in which a touch point exists, where the target sub-area is obtained by means of division according to a direction indicated by a horizontal channel in the target area, and a quantity of the target sub-areas is greater than 1, but is less than or equal to a quantity of horizontal channels in the target area;

a horizontal coordinate determining module 702, configured to: determine whether the target sub-area in which the touch point exists can be divided; and if it can be divided, determine the target sub-area in which the touch point exists as a target area; or if it cannot be divided, determine a horizontal coordinate of the touch point; and

a vertical coordinate determining module 703, configured to determine a vertical coordinate corresponding to the touch point according to vertical channels that receive horizontal channel signals in parallel.

The horizontal coordinate and the vertical coordinate that are of the touch point are position information of the touch point.

Preferably, in some specific embodiments, the scanning module 701 is specifically configured to: sequentially perform parallel scanning on the horizontal channels in each target sub-area in the multiple target sub-areas, and determine the target sub-area in which the touch point exists.

Optionally, in some specific embodiments, the scanning module 701 is specifically configured to: perform parallel scanning on horizontal channels in the multiple target sub-areas in parallel, and determine the target sub-area in which the touch point exists.

Preferably, in some specific embodiments, in terms of determining whether the target sub-area in which the touch point exists can be divided, the horizontal coordinate determining module is specifically configured to: determine whether the target sub-area in which the touch point exists has only one horizontal channel; and if the target sub-area in which the touch point exists has only one horizontal channel, determine that the target sub-area in which the touch point exists cannot be divided; or if the target sub-area in which the touch point exists has multiple horizontal channels, determine that the target sub-area in which the touch point exists can be divided.

Preferably, in some specific embodiments, in terms of determining the horizontal coordinate of the touch point, the horizontal coordinate determining module is specifically configured to determine that a horizontal coordinate of a horizontal channel of the target sub-area in which the touch point exists is the horizontal coordinate of the touch point.

Preferably, in some specific embodiments, the vertical coordinate determining module is specifically configured to: detect whether capacitances on the vertical channels that receive the horizontal channel signals in parallel change, and if it is detected that a capacitance on a vertical channel changes, determine that a vertical coordinate corresponding to the vertical channel whose capacitance changes is the vertical coordinate corresponding to the touch point.

Preferably, in some specific embodiments, the quantity of the target sub-areas is two, and the two target sub-areas have an equal or an approximately equal quantity of horizontal channels. In this case, the scanning module 701 is specifically configured to: divide the target area into two target sub-areas: an upper half screen and a lower half screen, separately perform parallel scanning on multiple horizontal channels of the upper half screen and the lower half screen, and determine a half screen in which the touch point exists.

For a detailed interaction process of the function modules of the touch point positioning apparatus 7 in this embodiment of the present invention, refer to embodiments shown in FIG. 3. FIG. 4, FIG. 5, and FIG. 6, and details are not described herein.

In this embodiment of the present invention, a scanning module 701 of the touch point positioning apparatus does not perform progressive scanning on a touchscreen, but divides the touchscreen into N target sub-areas based on an N-division method, and separately performs parallel scanning on all horizontal X channels of each target sub-area. A target sub-area in which no touch point exists is not scanned; and a target sub-area in which a touch point exists is scanned by repeating the foregoing actions, that is, performing iterative division by using the N-division method, until division cannot be performed. Then, a horizontal coordinate determining module 701 may determine a horizontal coordinate of the touch point, and a vertical coordinate determining module 703 may determine a vertical coordinate corresponding to the touch point according to vertical channels that receive horizontal channel signals in parallel. In this embodiment of the present invention, a horizontal coordinate is scanned by means of parallel transmission on multiple channels, and a scanning range is narrowed in an iterative descending manner by using a dichotomy, so that the scanning range of the touchscreen can be gradually reduced, scanning time is reduced, and a point report rate is improved.

An embodiment of the present invention provides a terminal device. The terminal device includes a touchscreen and the touch point positioning apparatus described in Embodiment 7. A touchable area of the touchscreen is an initial target area. The touchscreen and the touch point positioning apparatus may be connected in a physical manner, and may have an information transmission relationship.

An embodiment of the present invention further provides a terminal device, as shown in FIG. 8. For ease of description, only a part related to this embodiment of the present invention is illustrated. For specific technical details that are not disclosed, refer to the method part in the embodiments of the present invention. The terminal device may be any terminal device, including: a mobile phone, a tablet computer, a PDA (Personal Digital Assistant, personal digital assistant), a POS (Point of Sales, point of sales), a vehicle-mounted computer, a wearable device, or the like. In the following, a mobile phone is used as an example for description.

FIG. 8 shows a block diagram of a partial structure of a mobile phone related to the terminal device provided in this embodiment of the present invention. Persons skilled in the art may understand that the structure of the mobile phone shown in FIG. 8 imposes no limitation on the mobile phone, and the mobile phone may include more or fewer components than those shown in the figure, or may combine some components, or have different component arrangements.

In the following, all components of the mobile phone are described in detail with reference to FIG. 8.

An input unit 830 may be configured to receive entered digital or character information, and generate key signal inputs related to user setting and function control of the mobile phone. Specifically, the input unit 830 may include a touchscreen 831 (or a touch panel) and another input device 832. The touchscreen in this embodiment of the present invention is a mutual capacitive touchscreen and at least includes multiple drive electrodes and multiple sensing electrodes. The drive electrodes form multiple horizontal drive lines, the sensing electrodes form multiple vertical sensing lines, and the drive electrodes and the sensing electrodes form a mutual capacitor. For a specific hardware structure, refer to FIG. 1-1 to FIG. 1-6, and details are not described herein again.

The touchscreen 831 may collect a touch operation performed by a user on or near the touchscreen 831, and drive a corresponding connected apparatus according to a preset program. Optionally, the touchscreen 831 further includes two parts: a touch detection apparatus and a touchscreen controller. The touch detection apparatus is configured to detect a touch position of the user, detect a signal brought by the touch operation, and send the signal to the touch controller. The touchscreen controller receives touch information from the touch point detection apparatus, converts the touch information into coordinates of a touch point, then sends the coordinates of the touch point to a processor 880, and can receive and execute a command sent by the processor 880.

The touchscreen controller is specifically configured to control the drive lines in the touchscreen to transmit excitation signals, control the sensing lines to receive the excitation signals, and perform all or some actions in the method embodiment of the present invention. It should be noted that the touchscreen controller may be specifically a micro control unit (Microcontroller Unit, MCU) in the touchscreen.

Specifically, in a specific implementation of processing a touch point inside the mobile phone, after the touch detection apparatus detects a touch point, the touchscreen controller in the touchscreen reports the touch point to an application processor (Application Processor, AP) in the processor, and the application processor AP converts the detected touch point into interaction with a user interface object (for example, one or more soft keys, an icon, a web page, or an image) displayed on the touchscreen. Alternatively, the touchscreen may report the touch point to a coprocessor, and after preprocessing data of the touch point, the coprocessor reports the data of the touch point to the AP.

In some embodiments, the touchscreen controller may not be located in the touchscreen, and an application processor or an integrated circuit (integrated circuit, IC) in the terminal device may directly perform all or some actions in the foregoing method embodiment.

In addition, the touchscreen 831 in this embodiment of the present invention may further include another component that is not included in FIG. 1, for example, a cache, a shield layer that is used for anti-electromagnetic interference and that is between a drive layer and a sensing layer, and another protection layer, and details are not described herein.

A display unit 840 may be configured to display information entered by the user or information provided for the user, and various menus of the mobile phone. The display unit 840 may include a display panel 841. Optionally, a form such as a liquid crystal display (Liquid Crystal Display, LCD) or an organic light-emitting diode (Organic Light-Emitting Diode, OLED) may be used to configure the display panel 841. Further, the touchscreen 831 may cover the display panel 841. After detecting the touch operation on or near the touchscreen 831, the touchscreen 831 transmits the touch operation to the processor 880 to determine a type of a touch event, and then the processor 880 provides a corresponding visual output on the display panel 841 according to the type of the touch event. In FIG. 8, the touch panel 831 and the display panel 841 are used as two independent components to implement input and input functions of the mobile phone. However, in some embodiments, the touch panel 831 and the display panel 841 may be integrated to implement the input and output functions of the mobile phone.

A memory 820 may be configured to store a software program and a module. By running the software program and the module that are stored in the memory 820, the processor 880 performs various function applications and data processing of the mobile phone. The memory 820 may mainly include a program storage area and a data storage area. The program storage area may store an operating system, an application program required by at least one function (such as a voice playing function and an image playing function), and the like, and the data storage area may store data (such as audio data and a phone book) created according to use of the mobile phone, and the like. In addition, the memory 820 may include a high-speed random access memory, and may further include a nonvolatile memory, such as at least one magnetic disk storage component, a flash memory component, or another volatile solid-state storage component.

The mobile phone may further include at least one type of sensor 850, such as a light sensor, a motion sensor, and another sensor, and details are not described herein.

In addition, an RF circuit 810 in this embodiment of the present invention may be configured to receive and send information, or to receive and send a signal in a call process. In particular, after receiving downlink information of a base station, the RF circuit 810 sends the downlink information to the processor 880 for processing. In addition, the RF circuit 810 sends designed uplink data to the base station. An audio circuit 860 may provide an audio interface between the user and the mobile phone. The mobile phone may help, by using a WiFi module 870, the user receive and send an email, browse a web page, access streaming media, and the like. The WiFi module 807 provides wireless broadband Internet access for the user. Although the WiFi module 870 is shown in FIG. 8, it should be understood that the WiFi module 807 is not a mandatory component of the mobile phone, and may be omitted as required without changing a scope of the essence of the present invention.

The processor 880 is a control center of the mobile phone, and uses various interfaces and lines to connect all parts of the entire mobile phone. By running or executing the software program or the module or both that are stored in the memory 820 and invoking data stored in the memory 820, the processor 880 executes various functions and data processing of the mobile phone, so as to perform overall monitoring on the mobile phone. Optionally, the processor 880 may include one or more processing units. Preferably, an application processor and a modem processor may be integrated into the processor 880. The application processor mainly processes an operating system, a user interface, an application program, or the like; and the modem processor mainly processes radio communication. It may be understood that the foregoing modem processor may not be integrated into the processor 880.

The mobile phone further includes a power supply 890 (such as a battery) that supplies power to the components. Preferably, the power supply may be logically connected to the processor 880 by using a power management system, so as to implement functions such as management of charging, discharging, and power consumption by using the power supply management system. Although not shown, the mobile phone may further include a camera, a Bluetooth module, and the like, and details are not described herein.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A touch point positioning method, comprising:

   step 1: for each target sub-area in a target area, performing parallel scanning on horizontal channels in the target sub-area, and determining a target sub-area in which a touch point exists, wherein the target sub-area is obtained by means of division according to a direction indicated by a horizontal channel in the target area, and a quantity of the target sub-areas is greater than 1, but is less than or equal to a quantity of horizontal channels in the target area; and
   step 2: determining whether the target sub-area in which the touch point exists can be divided, and if the target sub-area in which the touch point exists can be divided, determining the target sub-area in which the touch point exists as the target area, and repeatedly performing step 1 and step 2; or
   if the target sub-area in which the touch point exists cannot be divided, determining a horizontal coordinate of the touch point, and determining a vertical coordinate corresponding to the touch point according to vertical channels that receive horizontal channel signals in parallel.

2. The method according to claim 1, wherein for each target sub-area in a target area, the performing parallel scanning on horizontal channels in the target sub-area, and determining a target sub-area in which a touch point exists comprises:

   sequentially performing parallel scanning on the horizontal channels in each target sub-area in the multiple target sub-areas, and determining the target sub-area in which the touch point exists; or
   performing parallel scanning on horizontal channels in the multiple target sub-areas in parallel, and determining the target sub-area in which the touch point exists.

3. The method according to claim 1 or 2, wherein the determining whether the target sub-area in which the touch point exists can be divided comprises:
   determining whether the target sub-area in which the touch point exists has only one horizontal channel; and if the target sub-area in which the touch point exists has only one horizontal channel, determining that the target sub-area in which the touch point exists cannot be divided; or if the target sub-area in which the touch point exists has multiple horizontal channels, determining that the target sub-area in which the touch point exists can be divided.

4. The method according to claim 3, wherein the determining a horizontal coordinate of the touch point comprises:
   determining that a horizontal coordinate of a horizontal channel of the target sub-area in which the touch point exists is the horizontal coordinate of the touch point.

5. The method according to any one of claims 1 to 4, wherein the determining a vertical coordinate corresponding to the touch point according to vertical channels that receive horizontal channel signals in parallel comprises:
   detecting whether capacitances on the vertical channels that receive the horizontal channel signals in parallel change, and if it is detected that a capacitance on a vertical channel changes, determining that a vertical coordinate corresponding to the vertical channel whose capacitance changes is the vertical coordinate of the touch point.

6. The method according to any one of claims 1 to 5, wherein the quantity of the target sub-areas is two, and the two target sub-areas have an equal quantity of horizontal channels.

**7.** A touch point positioning apparatus, comprising:

a scanning module, configured to: for each target sub-area in a target area, perform parallel scanning on horizontal channels in the target sub-area, and determine a target sub-area in which a touch point exists, wherein the target sub-area is obtained by means of division according to a direction indicated by a horizontal channel in the target area, and a quantity of the target sub-areas is greater than 1, but is less than or equal to a quantity of horizontal channels in the target area;

a horizontal coordinate determining module, configured to: determine whether the target sub-area in which the touch point exists can be divided; and if the target sub-area in which the touch point exists can be divided, determine that the target sub-area in which the touch point exists is the target area; or if the target sub-area in which the touch point exists cannot be divided, determine a horizontal coordinate of the touch point; and

a vertical coordinate determining module, configured to determine a vertical coordinate corresponding to the touch point according to vertical channels that receive horizontal channel signals in parallel.

**8.** The touch point positioning apparatus according to claim 7, wherein the scanning module is specifically configured to:

sequentially perform parallel scanning on the horizontal channels in each target sub-area in the multiple target sub-areas, and determine the target sub-area in which the touch point exists.

**9.** The touch point positioning apparatus according to claim 7, wherein the scanning module is specifically configured to:

perform parallel scanning on horizontal channels in the multiple target sub-areas in parallel, and determine the target sub-area in which the touch point exists.

**10.** The touch point positioning apparatus according to any one of claims 7 to 9, wherein in terms of determining whether the target sub-area in which the touch point exists can be divided, the horizontal coordinate determining module is specifically configured to:

determine whether the target sub-area in which the touch point exists has only one horizontal channel; and if the target sub-area in which the touch point exists has only one horizontal channel, determine that the target sub-area in which the touch point exists cannot be divided; or if the target sub-area in which the touch point exists has multiple horizontal channels, determine that the target sub-area in which the touch point exists can be divided.

**11.** The touch point positioning apparatus according to claim 10, wherein in terms of determining the horizontal coordinate of the touch point, the horizontal coordinate determining module is specifically configured to:

determine that a horizontal coordinate of a horizontal channel of the target sub-area in which the touch point exists is the horizontal coordinate of the touch point.

**12.** The touch point positioning apparatus according to any one of claims 7 to 11, wherein the vertical coordinate determining module is specifically configured to:

detect whether capacitances on the vertical channels that receive the horizontal channel signals in parallel change, and if it is detected that a capacitance on a vertical channel changes, determine that a vertical coordinate corresponding to the vertical channel whose capacitance changes is the vertical coordinate corresponding to the touch point.

**13.** The touch point positioning apparatus according to any one of claims 7 to 12, wherein the quantity of the target sub-areas is two, and the two target sub-areas have an equal quantity of horizontal channels.

**14.** A terminal device, wherein the terminal device comprises a touchscreen and a touch point positioning apparatus that is connected to the touchscreen, a touchable area of the touchscreen is an initial target area, and the touch point positioning apparatus is the touch point positioning apparatus according to any one of claims 7 to 13.

**15.** A terminal device, wherein the terminal device comprises a touchscreen and a touchscreen controller that is connected to the touchscreen, and the touchscreen comprises multiple horizontal electrodes and multiple vertical electrodes; and

the touchscreen controller is configured to: for each target sub-area in a target area of the touchscreen, perform scanning by controlling horizontal electrodes in the target sub-area to send excitation signals in parallel, and controlling all vertical electrodes to receive the excitation signals in parallel; determine a target sub-area in which a touch point exists, wherein the target sub-area is obtained by means of division according to a direction indicated by a horizontal channel formed by horizontal electrodes in the target area, and a quantity of the target sub-areas is greater than 1, but is less than or equal to a quantity of horizontal channels formed by horizontal electrodes in the target area; determine whether the target sub-area in which the touch point exists can be divided; and if the target sub-area in which the touch point exists can be divided, determine the target sub-area in which the touch point exists as the target area, and for each target sub-area in the target area, continue to perform scanning by controlling horizontal electrodes in the target sub-area to send excitation signals in parallel, and controlling all vertical electrodes to receive the excitation signals in parallel; or if the target sub-area in which the touch point exists cannot be divided, determine a horizontal coordinate of the touch point, and determine a vertical coordinate corresponding to the touch point according to a vertical channel in which a vertical electrode that receives a horizontal electrode signal in parallel is located.

FIG. 1-1

FIG. 1-2

FIG. 1-3

FIG. 1-4

FIG. 1-5

FIG. 1-6

Multichannel parallel receiving is used in Y channels

FIG. 2

For each target sub-area in a target area, perform parallel scanning on horizontal channels in the target sub-area, and determine a target sub-area in which a touch point exists — 301

Determine whether the target sub-area that includes the touch point can be divided — 302

Yes

No

Determine the target sub-area in which the touch point exists as the target area — 303

Determine a coordinate of the touch point — 304

Determine a vertical coordinate corresponding to the touch point according to vertical channels that receive horizontal channel signals in parallel — 305

FIG. 3

Multichannel parallel receiving

Multichannel parallel sending

1

2

3

4

5

6

An X coordinate and a Y coordinate are determined

FIG. 4

FIG. 5

FIG. 6

FIG. 7

FIG. 8

# INTERNATIONAL SEARCH REPORT

| International application No. |
| --- |
| **PCT/CN2017/071495** |

| A. CLASSIFICATION OF SUBJECT MATTER |
| --- |
| G06F 3/044 (2006.01) i; G06F 3/041 (2006.01) i<br>According to International Patent Classification (IPC) or to both national classification and IPC |

| B. FIELDS SEARCHED |
| --- |
| Minimum documentation searched (classification system followed by classification symbols)<br><br>G06F |
| Documentation searched other than minimum documentation to the extent that such documents are included in the fields searched |
| Electronic data base consulted during the international search (name of data base and, where practicable, search terms used)<br>Databases: CNPAT, CNKI, WPI, EPODOC<br>Key Words: touch screen, sensor, capacitance, position+, driv+, areas, groups, blocks, efficien+ |

| C. DOCUMENTS CONSIDERED TO BE RELEVANT | | |
| --- | --- | --- |
| Category* | Citation of document, with indication, where appropriate, of the relevant passages | Relevant to claim No. |
| PX | CN 105589613 A (HUAWEI TECHNOLOGIES CO., LTD.), 18 May 2016 (18.05.2016), claims 1-15 | 1-15 |
| X | CN 101706698 A (SHENZHEN GOODIX TECHNOLOGY CO., LTD.), 12 May 2010 (12.05.2010), description, paragraphs 3-13 and 23-49 | 1-15 |
| A | CN 104331196 A (JAPAN DISPLAY INC.), 04 February 2015 (04.02.2015), the whole document | 1-15 |
| A | CN 102681715 A (LG DISPLAY CO., LTD.), 19 September 2012 (19.09.2012), the whole document | 1-15 |
| A | US 2013127774 A1 (SAMSUNG ELECTRO-MECHANICS CO), 23 May 2013 (23.05.2013), the whole document | 1-15 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 April 2017 (14.04.2017) | **24 April 2017 (24.04.2017)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**GUO, Jianchun**<br><br>Telephone No.: (86-10) **62412073** |

Form PCT/ISA/210 (second sheet) (July 2009)

## INTERNATIONAL SEARCH REPORT
### Information on patent family members

International application No.

**PCT/CN2017/071495**

| Patent Documents referred in the Report | Publication Date | Patent Family | Publication Date |
|---|---|---|---|
| CN 105589613 A | 18 May 2016 | None | |
| CN 101706698 A | 12 May 2010 | CN 101706698 B | 11 January 2012 |
| CN 104331196 A | 04 February 2015 | KR 20150011322 A | 30 January 2015 |
| | | JP 2015043200 A | 05 March 2015 |
| | | US 2015022494 A1 | 22 January 2015 |
| | | TW 549046 B1 | 11 September 2016 |
| | | KR 1651733 B1 | 26 August 2016 |
| | | TW 201506754 A | 16 February 2015 |
| CN 102681715 A | 19 September 2012 | KR 20120078073 A | 10 July 2012 |
| | | KR 1715858 B1 | 13 March 2017 |
| | | KR 20120078072 A | 10 July 2012 |
| | | TW 201227482 A | 01 July 2012 |
| | | US 2012169660 A1 | 05 July 2012 |
| | | US 8884917 B2 | 11 November 2014 |
| | | CN 102681715 B | 03 February 2016 |
| US 2013127774 A1 | 23 May 2013 | KR 20130056081 A | 29 May 2013 |
| | | US 9146643 B2 | 29 September 2015 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610061741 X